# FASCICULE DE BREVET EUROPEEN

(11) **EP 0 935 151 B1**
(45) Date de publication et mention de la délivrance du brevet: **07.09.2005**
(21) Numéro de dépôt: 99400194.9
(22) Date de dépôt: 28.01.1999
(51) Int. Cl.: G02B 23/08, G03B 15/00

(54) **Perfectionnements aux dispositifs de prises de vues cinématographiques à partir d'un aéronef**
Verbesserungen von Filmkamera auf einem Luftfahrzeug
Improvements of cine cameras on an aircraft

(30) Priorité: 09.02.1998 FR 9801461
(43) Date de publication de la demande: 11.08.1999
(73) Titulaire: Aero Vision, 31700 Blagnac (FR)
(72) Inventeur: Piallat, Patrick, 31770 Colomiers (FR)
(74) Mandataire: Kaspar, Jean-Georges

(56) Documents cités:
- DE-A- 2 121 918
- DE-A- 19 517 122
- DE-A- 19 708 684
- US-A- 4 747 574
- PATENT ABSTRACTS OF JAPAN vol. 016, no. 048 (E-1163), 6 février 1992 & JP 03 250870 A (MATSUSHITA ELECTRIC IND CO LTD), 8 novembre 1991

## Description

La présente invention a pour objet des perfectionnements aux dispositifs de prises de vue cinématographiques à partir d'un aéronef tel qu'un avion ou un hélicoptère.

Il est connu de filmer un avion en vol à partir d'un autre avion, par exemple pour présenter un nouvel avion ou pour la publicité des compagnies aériennes.

Pour cela, on utilise une caméra montée à l'extrémité supérieure d'un périscope disposé dans un avion, et dont l'extrémité inférieure fait saillie à l'extérieur en dessous de la carlingue. A cette extrémité est placé un prisme à réflexion totale qui renvoie l'image à travers le périscope jusqu'à la caméra. Le prisme est mobile autour d'un axe horizontal de façon à pouvoir effectuer un balayage vertical de 10° au-dessus de l'horizon et 30° au-dessous. De plus, le périscope est porté par une table tournante qui permet de le faire pivoter autour de son axe vertical pour balayer l'horizon sur 360°.

Ce dispositif a été perfectionné une première fois en montant la caméra sur le périscope de façon qu'elle puisse tourner par rapport à ce dernier. Ainsi, lorsque le périscope est mis en rotation en entraînant la caméra, on réalise un balayage panoramique et, lorsque l'on fait tourner la caméra par rapport au périscope, on modifie l'inclinaison de l'image ce qui permet de corriger, si besoin est, l'horizontalité de l'image.

Le dispositif actuellement en usage s'avère insuffisant pour tourner des films d'avions évoluant à grande vitesse, même lorsque ce matériel de prises de vue est lui-même installé dans un avion à réaction du gere avion d'affaires (Learjet, Falcon, Corvette ou analogue).

Un dispositif de prises de vues est également décrit dans le document DE 19708684

La présente invention concerne un appareil de prises de vues aériennes cinématographiques à périscope rotatif de type connu selon la revendication 1.

Cet appareil comporte des améliorations : du système optique périscopique ; des moyens de mise en rotation du périscope et/ou de la caméra et des moyens de commande des différents mouvements.

Afin de faciliter la compréhension de l'invention, on a représenté aux dessins annexés :
- Figure 1 : une vue schématique en élévation latérale, avec coupe partielle du dispositif selon l'invention monté dans un avion d'accompagnement.
- Figure 2 : une vue schématique de face du prisme du tube télescopique.
- Figure 3 : une vue schématique de côté du prisme de la figure 2.
- Figure 4 : un diagramme illustrant les connexions des divers éléments.
- Figure 5 : une vue schématique illustrant un itinéraire filmé à partir d'une trajectoire fixe XY.

En se reportant à ces figures, on voit que l'appareil de prises de vues cinématographiques aériennes à partir d'un aéronef, par exemple d'un avion, est constitué :
- d'un prisme 1,
- d'un tube périscopique 2,
- et d'une caméra 3.

Le tube périscopique 2, à l'extrémité duquel se trouve le prisme 1, traverse le plancher de la cabine ainsi que la paroi de la carlingue de l'avion A. Le tube périscopique 2 est monté à rotation par rapport à l'avion A et fait saillie hors de la carlingue de l'avion A dans un dôme 10, muni de vitres telles que 11.

Dans le dispositif connu, l'extrémité du périscope comporte un miroir dont l'inclinaison peut être modifiée. Ce miroir est un prisme à toit, c'est-à-dire un prisme qui redresse l'image. Ce prisme est porté par un levier pivotant qui est soumis à la traction d'un câble, à l'encontre d'un ressort de rappel. Il en résulte que le centre de gravité de l'ensemble n'est pas situé sur l'axe de rotation du prisme, ce qui a pour conséquence que lorsque l'avion porteur est soumis, lors d'évolutions, à des accélérations (et donc une augmentation du nombre de "g") le miroir pivote en tendant son ressort de rappel, ce qui rend pratiquement impossible la poursuite de la cible.

Dans l'exemple de réalisation décrit, on utilise un prisme spécial 1 (mis au point par la Société KINOPTIC et non décrit parce que ne rentrant pas dans le cadre de la présente invention) qui, de façon résumée, est un double miroir 13 avec un prisme (14, 15) de chaque côté et qui est porté à rotation par un arbre 16 passant par son axe de symétrie de façon à être parfaitement équilibré et donc insensible aux variations de la pesanteur (variations du nombre de "g").

En tournant autour de son axe 16, ce prisme peut réaliser un balayage vertical complet sur 360°. Dans la pratique, du fait de l'obstacle constitué par la carlingue de l'avion A, ce balayage est limité à 22° au-dessus de l'horizon de part et d'autre de la verticale ; de sorte que le balayage est de 224° (22 + 180 + 22) ; c'est-à-dire considérablement supérieur à celui du dispositif connu à prisme en toit qui ne permettait qu'un balayage partiel entre 10° au-dessus de l'horizon et 30° au-dessous.

En outre, le miroir à prisme en toit du dispositif antérieur provoquait un agrandissement de l'image ce qui d'une part entraînait des déformations de l'image, et surtout ne permettait d'employer que certaines caméras.

Le prisme employé dans le dispositif objet de l'invention est un système afocal de grandissement 1, ayant un champ de 35° ce qui permet d'utiliser n'importe quelle caméra 3.

L'emploi d'un prisme tel que le prisme 1 apporte une amélioration considérable en ce qui concerne l'équilibrage des masses et le balayage, mais présente l'inconvénient d'inverser l'image, ce qui ne fait pas le prisme en toit. Il est alors nécessaire de redresser l'image, ce qui ne peut se faire que dans le tube périscopique 2, ce qui nécessite l'emploi d'un prisme 20 dit "prisme de Péchan" qui réalise un redressement de l'image dans l'axe optique 21.

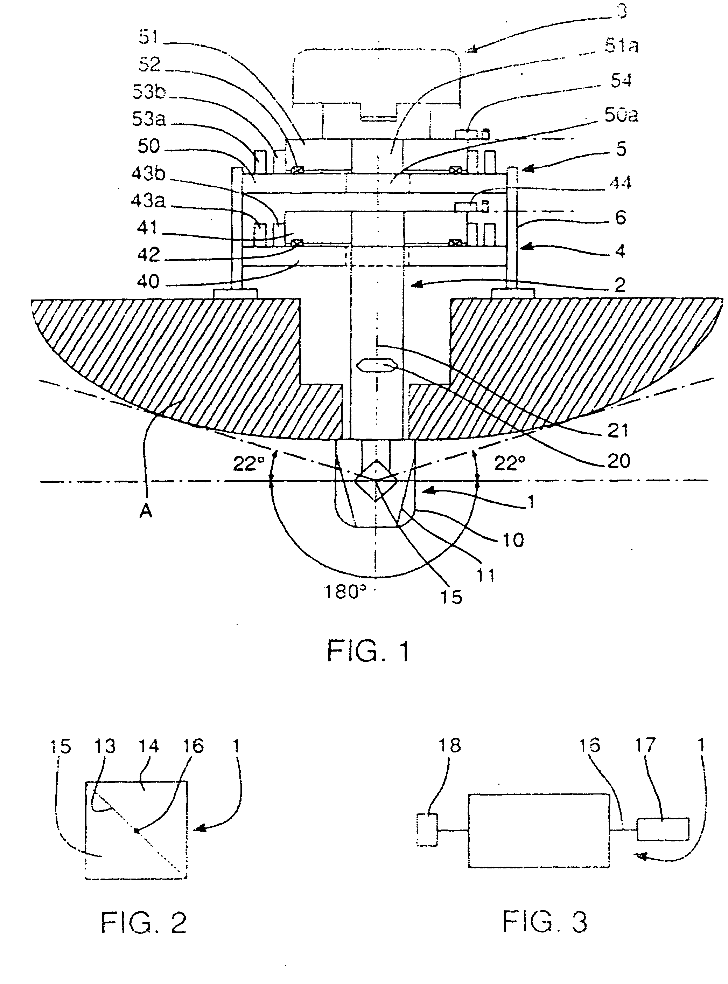

Comme cela est représenté de façon schématique aux figures 2 et 3, l'arbre 16 qui porte le prisme 1 porte également le moteur d'entraînement 17 et le capteur de position 18. Le moteur d'entraînement 17 est un moteur linéaire de sorte qu'il n'y a aucune pièce mécanique de transmission de mouvement entre le moteur 17 et l'arbre 16, ce qui élimine toute vibration.

Un autre perfectionnement concerne les moyens d'entraînement en rotation du tube périscopique 2 autour de son axe et de la rotation, coaxiale, de la caméra 3 par rapport audit tube périscopique.

Dans l'appareil connu, lorsque le tube périscopique 2 tourne, du fait qu'il porte la caméra 3, celle-ci tourne en même temps et, pour obtenir une rotation de la caméra 3 par rapport au tube 2, on a disposé entre la caméra et le périscope un moteur.

La rotation du périscope est obtenue par une transmission comportant une vis sans fin (entraînée par un moteur) engrenant dans une roue creuse. La rotation de la caméra par rapport an périscope est obtenue par les mêmes moyens. Il en résulte d'une part que les mouvements de rotation sont lents, d'autre part que les vibrations liées aux vols sont transmises au périscope et à la caméra.

Selon l'invention les deux éléments : tube périscopique 2 et caméra 3 sont portés indépendamment l'un de l'autre, chacun par un ensemble tournant 4 et 5. Les deux ensembles 4 et 5 sont l'un et l'autre portés par un châssis 6 reposant sur le plancher de l'avion A.

Chacun est constitué par un plateau circulaire 40, 50 fixé zu châssis 6, portant un plateau tournant 41, 51 au moyen de roulements à billes 42, 52, Chaque plateau tournant est mis en rotation par un moteur linéaire 43, 53 comprenant un stator 43a, 53a et un rotor 43b, 53b, le statut étant porté par le plateau fixe, 40, 50, et le rotor par le plateau tournant 41, 51. A chaque plateau tournant est associé un capteur de position 44, 54.

Le tube cylindrique 2 qui porte à son extrémité le prisme 1 traverse le plateau fixe 40 et le plateau tournant 41 et lui est fixé. Le plateau fixe 50 et le plateau tournant 51 comportent chacun un percement central 50a et 51a qui permet au faisceau optique traversant le tube périscopique 2 d'arriver jusqu'à la caméra 3.

Dans l'exemple représenté les plateaux fixes 40, 50, les plateaux tournants 41, 51 et les moteurs 43, 53 sont identiques ce qui permet une standardisation des pièces.

Une des particularités de l'invention est que ce mode de réalisation des moyens portant le tube périscopique 2 et la caméra 3 permet de faire porter les éléments tournants 41, 51 par des roulements 42, 52 de grandes dimensions. Par grandes dimensions on entend que les roulements 42, 52 ont un diamètre de l'ordre de 400 millimètres, alors que dans le dispositif connu le périscope est porté directement par un roulement de 150 millimètres. Dans le dispositif connu c'est le même roulement (de 150 mm) qui porte à la fois le tube périscopique 2 et la caméra 3 puisque celle-ci est portée par le périscope, de sorte que les vibrations transmises au périscope le sont aussi à la caméra. En disposant chaque élément indépendamment l'un de l'autre sur deux tables tournantes 4 et 5 indépendantes l'une de l'autre et de grandes dimensions, on élimine pratiquement les effets nocifs des vibrations.

Les moteurs 43-53 sont des moteurs linéaires à fort couple permettant une vitesse de rotation maximum de l'ordre de 540° par seconde et une précision de mouvement angulaire de l'ordre de 0,005°. L'utilisation de tels moteurs participe également à l'élimination des effets nocifs des vibrations.

Cependant, cette disposition si elle est très avantageuse quant à l'élimination des vibrations, ainsi que la rapidité et la précision des mouvements fait apparaître un problème lié au synchronisme des mouvements du tube périscopique 2 et de la caméra 3 lorsqu'on opère un balayage panoramique.

En effet, dans le dispositif connu, comme le tube périscopique 2 porte la caméra 3, cette dernière tourne avec le périscope et le synchronisme est parfait. Dans ce système le moteur faisant tourner la caméra par rapport au tube périscopique n'est sollicité que pour faire des corrections d'inclinaison, donc pour de très faibles mouvements.

Par contre, dans le dispositif selon la présente invention, lorsque l'on opère un balayage en faisant tourner le tube périscopique, la caméra 3 doit effectuer exactement le même mouvement de rotation, à la même vitesse, de façon absolument synchrone ; faute de quoi apparaîtront des inclinaisons parasites de l'image.

Pour pallier cette difficulté, les commandes des moteurs 43 et 53 sont gérées par ordinateur de façon à ce que les mouvements des tables soient synchrones à 0,005° près.

Cela est rendu possible par le fait que les moteurs 43 et 53, étant des moteurs linéaires, peuvent être contrôlés par informatique numérique, ce qui n'est pas le cas du moteur à courant continu auparavant employé.

L'emploi de moteurs linéaires tels que 18, 43 et 53 présente de nombreux avantages qui sont d'une très grande importance.

Sur les 3 axes : tangage, lacet et roulis, les transmissions sont exemptes de moyens mécaniques tels que roues creuses ou vis sans fin, ce qui a pour effet non seulement d'éliminer les erreurs dimensionnelles mais encore toute vibration.

De plus, le moteur linéaire à fort couple comme les moteurs 43-53 permettent des accélérations très rapides.

En plus, ils peuvent être mis en oeuvre par des moyens informatiques, c'est-à-dire par commande digitale ce qui permet d'avoir une loi de commande basée sur la fréquence et donc une synchronisation précise jusqu'à 10 tours par seconde.

Les mouvements relatifs de la caméra 3 par rapport au tube périscopique 2 ont pour objet de corriger les variations de l'horizontalité de l'image, variations qui sont essentiellement dues aux turbulences.

La compensation des turbulences demande des déplacements qui sont de l'ordre de 1 à 2 degrés mais à une fréquence de l'ordre de 15 à 20 Hertz : cela est rigoureusement impossible avec la liaison caméra/tube périscopique au moyen d'un moteur classique entraînant une vis sans fin engrenant sur une roue creuse.

La disposition selon la présente invention permet entre autres choses une gyrostabilisation de l'image ce qui est impossible avec les moyens connus.

A noter que l'on pourrait, en recopiant le dispositif antérieur connu, faire porter la caméra 3 par le plateau 41 et disposer un moteur linéaire entre ce plateau 41 et la caméra 3 ; mais cela ne fonctionnerait pas. En effet, comme un moteur linéaire est exempt de tout moyen mécanique, tout mouvement commandé de la caméra 3 relativement au tube 2 (ou inversement) entraînerait par réaction ou couple antagoniste un mouvement en sens inverse de l'autre. Il est alors impératif d'avoir deux moyens de rotation indépendants l'un de l'autre, commandés séparément.

L'utilisation d'un ordinateur pour gérer les mouvements des tables tournantes permet d'informatiser tout le système.

Le système de commande comporte :
- un ordinateur gérant tout le système
- un clavier d'ordinateur
- deux écrans l'un permettant la visualisation du cadrage, l'autre donnant des informations numériques de positionnement de la cible filmée par rapport à l'aéronef porteur ainsi que les différents paramètres de prises de vues.
- de deux mini-manches dont l'un agit sur le mouvement de balayage vertical du prisme 1 et sur le mouvement de rotation du tube périscopique 2; l'autre sur la rotation de la caméra 3 relativement au tube périscopique 2 (correction d'horizontalité) et sur le zoom de la caméra 3.

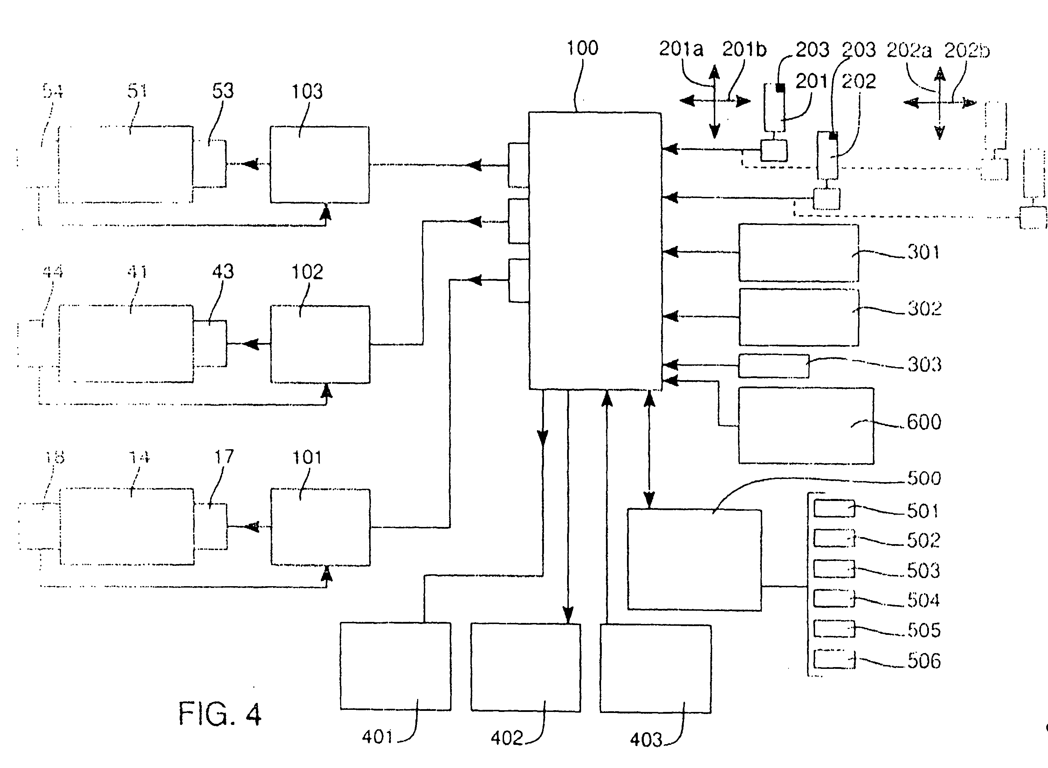

La figure 4 est le diagramme des connexions informatiques du système.

En se reportant à cette figure, on voit que le système comporte un ordinateur central 100, qui peut être un P.C., qui est relié à un écran 401, une imprimante 402 et un clavier 403.

Chacun des moteurs linéaires 17, 43 et 53 est relié à l'ordinateur 100 par l'intermédiaire d'un pilote 101, 102, 103 respectivement, auquel sont reliés les capteurs de positions 18, 44 et 54.

L'ordinateur 100 est également relié aux deux mini-manches 201 et 202 ; les déplacements des mini-manches 201 et 202 sont illustrés par des flèches en croix. La flèche double 201a correspond aux déplacements du tube 2 pour balayage panoramique ; la flèche double 201b correspond aux déplacements du prisme 14 pour le balayage selon l'axe de tangage. La flèche double 202a correspond aux déplacements à distance, c'est-à-dire au zoom ; la flèche double 202b correspond aux déplacements selon l'axe de roulis.

Ainsi au moyen de deux mini-manches 201 et 202 on commande, par l'intermédiaire de l'ordinateur 100, les pilotes 101, 102 et 103 et donc les moteurs 17, 43 et 53 et les déplacements selon l'axe de tangage, l'axe de lacet, l'axe de roulis ainsi que le zoom.

Comme on le voit sur la figure on peut disposer une ou plusieurs paires de mini-manches 201' et 202' pour faire de la double commande ou de la formation.

Toujours sur la figure 4, on voit que l'on peut brancher sur l'ordinateur 100 des stabilisateurs gyroscopiques 301, 302 et 303 afin d'avoir une stabilisation gyroscopique selon les 3 axes.

On peut également brancher sur l'ordinateur un système connu sous le nom de CPMS (Camera Pointing Management System ou encore Système de commande de pointage de la caméra) qui, au moyen d'un appareillage de positionnement par satellite permet de diriger automatiquement la caméra le long d'un itinéraire préétabli.

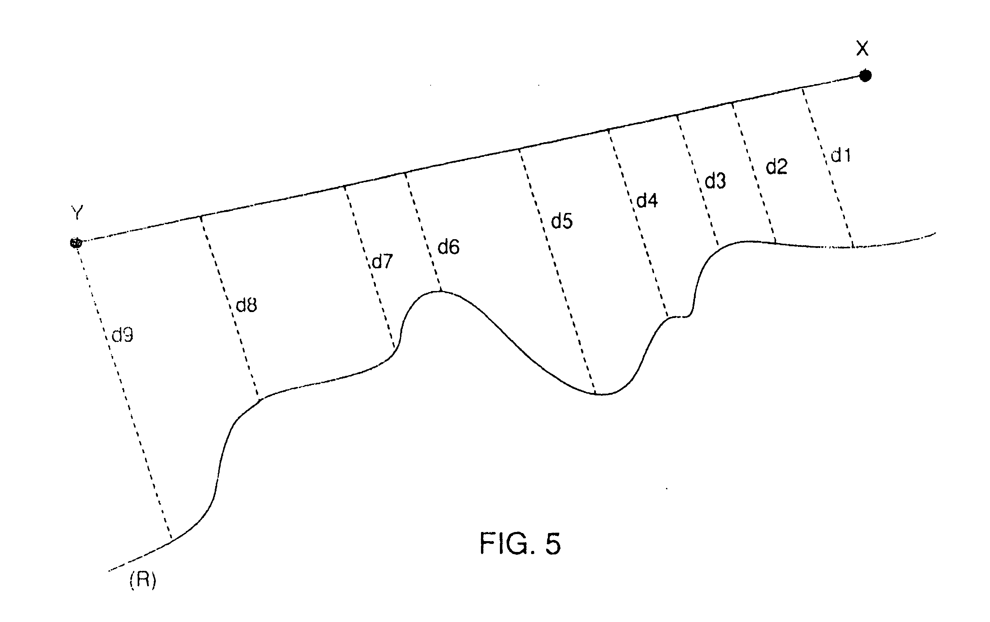

Ainsi, par exemple, si l'on veut filmer automatiquement un itinéraire le long d'une route R (Fig.5) à partir d'un avion qui se déplace d'un point X à un point Y à cap et altitude constants, on peut calculer à l'avance les distances d₁, d₂, d₃,... etc. et les variations de l'angle de la caméra puis l'introduire dans l'appareil 600 qui pilotera automatiquement les déplacements du prisme 1 et du zoom.

On peut également brancher sur l'ordinateur 100 un appareil enregistreur de données 500 qui enregistre automatiquement toutes les données relatives :
- à l'angle de tangage : 501
- à l'angle de roulis : 502
- au cap de l'avion : 503
- à l'altitude : 504
- à la position géographique : 505
- à l'heure et à la date : 506
ou autres.

Cette informatisation du système permet d'avoir trois modes de gestion :
a - un mode manuel : l'opérateur, au moyen des deux mini-manches commande les quatre mouvements,
b - un mode automatique sur une trajectoire donnée pré-enregistrée. L'avion (par le pilote automatique) et le système suivant les instructions données par l'ordinateur,
c - un mode semi-automatique : par stabilisation gyroscopique, les mouvements aléatoires de l'avion porteur étant automatiquement compensés pour avoir une image stable.

En outre, cela permet d'enregistrer et de mettre en mémoire toutes les positions de la caméra, du périscope, celles de l'avion porteur, les coordonnées géographiques du déplacement de l'avion et l'heure. Ces enregistrements permettant par la suite de réaliser à faibles coûts l'incrustation d'images de synthèse.

On peut également disposer sur les mini-manches 201 et/ou 202 des boutons 203 qui permettent de sélectionner différentes lois de variations de la vitesse des déplacements des moteurs 17, 43 ou 53. En effet, lorsque l'avion porteur et l'avion filmé volent de conserve, les déplacements relatifs sont faibles et les corrections à faire peu importantes mais précises ; alors que lorsque l'avion A est en poursuite derrière un avion filmé qui fait des évolutions brutales (cas d'un film d'action par exemple), les corrections à faire sont importantes et brutales.

## Revendications

1. Dispositif de prises de vues aériennes cinématographiques du type comprenant :
- un châssis (6) portant un premier ensemble tournant (4) et un deuxième ensemble tournant (5), mécaniquement indépendants l'un (4) de l'autre (5) ;
- ledit premier ensemble tournant (4) portant un tube périscopique (2) vertical à une extrémité duquel (2) se trouve un dispositif optique (1) susceptible d'effectuer un balayage vertical par pivotement autour d'un axe horizontal, de manière à entraîner le tube périscopique (2) en rotation autour de son axe vertical ;
- ledit deuxième ensemble tournant (5) portant une caméra (3), de manière à entraîner la caméra (3) selon une rotation coaxiale par rapport audit tube périscopique (2),
**caractérisé en** combinaison par le fait que chaque dit ensemble tournant (4 ou 5) comporte un plateau tournant (41 ou 51) monté à rotation sur un plateau fixe (40 ou 50) par rapport an châssis (6) et entraîné en rotation par un moyen d'entraînement (43 ou 53) respectif sans moyen mécanique de transmission de mouvement, de manière à éliminer les effets nocifs des vibrations,
et par le fait que le dispositif comporte des moyens de synchronisation de la rotation du tube périscopique (2) et de la rotation de la caméra (3), notamment lorsqu'on opère un balayage panoramique.

2. Dispositif selon la revendication 1, dans lequel lesdits moteurs (43, 53) sont des moteurs linéaires à fort couple permettant une vitesse de rotation de l'ordre de 540° par minute et une précision angulaire de l'ordre de 0,005°.

3. Dispositif selon la revendication 1 ou 2, comportant un capteur de position (44, 54) associé à chaque ensemble tournant (4, 5).

4. Dispositif selon l'une quelconque des revendications 1 à 3, dans lequel les ensembles tournants (4, 5) comportent des roulements (42, 52) de grand diamètre, de l'ordre de 400 millimètres, par l'intermédiaire desquels les plateaux tournants (41, 51) reposent sur les plateaux fixes (40, 50).

5. Dispositif selon l'une quelconque des revendications 1 à 4, dans lequel les plateaux fixes (40, 50), les plateaux tournants (41, 51) et les moteurs (43, 53) sont identiques et interchangeables entre le premier ensemble tournant (4) et le deuxième ensemble tournant (5), de manière à permettre une standardisation des pièces.

6. Dispositif selon l'une quelconque des revendications 1 à 5, comportant des moyens de commande de moteur ou de moyens d'entraînement (43 ou 53) pivotables par ordinateur (100), de manière à gérer la rotation des plateaux tournants (41, 51) par ordinateur (100), pour obtenir une synchronisation des rotations desdits plateaux tournants (41, 51) lorsque le dispositif effectue un balayage panoramique.

7. Dispositif selon la revendication 1, dans lequel le tube périscopique (2) comporte à une extrémité un prisme (1) monté pivotant autour d'un axe (16) horizontal passant par le centre de gravité du prisme.

8. Dispositif selon la revendication 7, dans lequel le prisme (1) est un prisme de prises de vues comportant un double miroir (13) avec un prisme (14, 15) de chaque côté, porté à rotation par un arbre (16) passant par son axe de symétrie, de façon à être parfaitement équilibré et donc insensible aux variations de la pesanteur.

9. Dispositif selon la revendication 8, dans lequel la rotation de l'arbre (16) du prisme (1) est commandée par un moteur linéaire (17) muni d'un capteur de position (18).

10. Dispositif selon la revendication 8, dans lequel le tube périscopique (2) comporte, entre le prisme (1) de prises de vues et la caméra (3) un dispositif optique (20) redresseur d'images.

11. Dispositif selon la revendication 10, dans lequel le dispositif optique (20) redresseur d'images est un prisme de PECHAN.

12. Dispositif selon l'une quelconque des revendications 1 à 11, dans lequel les moteurs du prisme (1) et des plateaux tournants (41, 51) sont des moteurs linéaires et sont commandés numériquement par l'intermédiaire d'un pilote (101, 102, 103).

13. Dispositif selon la revendication 12, comportant des pilotes (101, 102, 103) de moteurs dans lesquels les pilotes (101, 102, 103) des moteurs sont reliés à un ordinateur (100).

14. Dispositif selon la revendication 13, comportant au moins une paire de mini-manches (201, 202), dans lequel l'ordinateur (100) est relié à au moins une paire de mini-manches (201, 202) commandant l'un (201) les déplacements selon es axes de tangage et de lacet, l'autre (202) le déplacement selon l'axe de roulis ainsi que le zoom.

15. Dispositif selon la revendication 14, comportant en outre au moins une paire supplémentaire de mini-manches (201, 202) pour faire de la double commande ou de la formation.

16. Dispositif selon la revendication 13, comportant un ordinateur (100), dans lequel l'ordinateur (100) est relié à des stabilisateurs gyroscopiques (301, 302, 303).

17. Dispositif selon la revendication 13, comportant un ordinateur (100), dans lequel l'ordinateur (100) est relié à un dispositif d'enregistrement de données (500).

18. Dispositif selon la revendication 13, comportant un ordinateur (100), dans lequel l'ordinateur (100) est relié à un dispositif (600) de pointage automatique de caméra.

19. Dispositif selon la revendication 13, comportant un ordinateur (100), dans lequel l'ordinateur (100) est relié à un écran (401), une imprimante (402) et un clavier (403).

20. Dispositif selon l'une quelconque des revendications précédentes, comportant des moyens pour enregistrer et mettre en mémoire toutes les positions de la caméra, du périscope, de l'avion porteur ainsi que les coordonnées géographiques du déplacement de l'avion porteur et l'heure.

## Patentansprüche

1. Vorrichtung für kinematographische Luftaufnahmen, der Art mit
- einem Gestell (6), das eine erste sich drehende Einheit (4) und eine zweite sich drehende Einheit (5) trägt, wobei die eine (4) von der anderen (5) mechanisch unabhängig ist,
- wobei die erste sich drehende Einheit (4) ein vertikales Periskoprohr (2) trägt, an dessen einem Ende (2) sich eine optische Einrichtung (1) befindet, die eine Vertikalabtastung durch Verschwenken um eine horizontale Achse durchführen kann, um das Periskoprohr (2) zur Drehung um dessen vertikale Achse anzutreiben;
- wobei die zweite sich drehende Einheit (5) eine Kamera (3) trägt, um die Kamera (3) zur koaxialen Drehung relativ zum Periskoprahr (2) anzutreiben,
**dadurch gekennzeichnet, daß** jede sich drehende Einheit (4 oder 5) eine Drehscheibe (41 oder 51) umfaßt, die verdrehbar auf einer relativ zum Gestell (6) feststehenden Scheibe (40 oder 50) montiert ist und durch ein entsprechendes Antriebsmittel (43 oder 53) ohne mechanisches Bewegungsübertragungsmittel zur Drehung angetrieben wird, um schädliche Auswirkungen von Vibrationen zu beseitigen,
und **dadurch**, daß die Vorrichtung Mittel zum Synchronisieren der Drehung des Periskoprohrs (2) und der Drehung der Kamera (3), insbesondere beim Durchführen einer Panoramaabtastung, umfaßt.

2. Vorrichtung nach Anspruch 1, bei der die Motoren (43, 53) Linearmotoren mit großem Drehmoment sind, das eine Drehgeschwindigkeit in Größe von 540° pro Minute und eine Winkelgenauigkeit in Größe von 0,005° ermöglicht.

3. Vorrichtung nach Anspruch 1 oder 2 mit einem jeder sich drehenden Einheit (4, 5) zugeordneten Positionssensor (44, 54).

4. Vorrichtung nach einem der Ansprüche 1 bis 3, bei der die sich drehenden Einheiten (4, 5) Wälzlager (42. 52) mit einem großen Durchmesser in Größe von 400 Millimetern umfassen. über welche die Drehscheiben (41, 51) auf den feststehenden Scheiben (40, 50) sitzen.

5. Vorrichtung nach einem der Ansprüche 1 bis 4, bei der die feststehenden Scheiben (40, 50), die Drehscheiben (41, 51) und die Motoren (43, 53) zwischen der ersten sich drehenden Einheit (4) und der zweiten sich drehenden Einheit (5) identisch und austauschbar sind, was eine Standardisierung der Teile ermöglicht.

6. Vorrichtung nach einem der Ansprüche 1 bis 5, mit Mitteln zur Motorsteuerung oder zur Steuerung von verschwenkbaren Antriebsmitteln (43 oder 53) per Computer (100), um die Drehung der Drehscheiben (41, 51) per Computer (100) zu steuern und so eine Synchronisation der Drehungen der Drehscheiben (41, 51) zu erhalten, wenn die Vorrichtung eine Panoramaabtastung durchführt.

7. Vorrichtung nach Anspruch 1, bei der das Periskoprohr (2) an einem Ende ein Prisma (1) aufweist, das um eine horizontale Achse (16), die durch den Schwerpunkt des Prismas hindurchläuft, verschwenkbar montiert ist.

8. Vorrichtung nach Anspruch 7, bei der das Prisma (1) ein Prisma für Aufnahmen ist, das einen Doppelspiegel (13) mit einem Prisma (14, 15) auf jeder Seite umfaßt, der drehbar von einer Welle (16) getragen wird, welche durch seine Symmetrieachse hindurchläuft, so daß er sich vollständig ausbalanciert und somit gegenüber Gewichtsveränderungen unempfindlich ist.

9. Vorrichtung nach Anspruch 8, bei der die Drehung der Welle (16) des Prismas (1) von einem Linearmotor (17) gesteuert wird, der mit einem Positionssensor (18) versehen ist.

10. Vorrichtung nach Anspruch 8, bei der das Periskoprohr (2) zwischen dem Prisma (1) für Aufnahmen und der Kamera (3) eine bildlageninvertierende optische Einrichtung (20) umfaßt.

11. Vorrichtung nach Anspruch 10, bei der die bildlageninvertierende optische Einrichtung (20) ein PECHAN-Prisma ist.

12. Vorrichtung nach einem der Ansprüche 1 bis 11, bei der die Motoren des Prismas (1) und der Drehscheiben (41, 51) Linearmotoren sind und über ein Steuergerät (101, 102, 103) numerisch gesteuert werden.

13. Vorrichtung nach Anspruch 12, mit Motor-Steuergeräten (101, 102, 103), wobei die Steuergeräte (101, 102, 103) der Motoren mit einem Computer (100) verbunden sind.

14. Vorrichtung nach Anspruch 13, mit mindestens einem Paar Steuerknüppel (201, 202), bei welcher der Computer (100) mit mindestens einem Paar Steuerknüppel (201, 202) verbunden ist, wobei der eine (201) die Bewegungen entlang der Nick- und der Gierachse und der andere (202) die Bewegung entlang der Rollachse sowie das Zoomen steuert.

15. Vorrichtung nach Anspruch 14, ferner mit mindestens einem zusätzlichen Paar von Steuerknüppeln (201, 202) zur Doppelsteuerung oder zur Ausbildung.

16. Vorrichtung nach Anspruch 13, mit einem Computer (100), der mit Kreiselstabilisatoren (301, 302. 303) verbunden ist.

17. Vorrichtung nach Anspruch 13, mit einem Computer (100), der mit einem Datenerfassungsgerät (500) verbunden ist.

18. Vorrichtung nach Anspruch 13, mit einem Computer (100), der mit einer Vorrichtung (600) zum automatischen Ausrichten der Kamera verbunden ist.

19. Vorrichtung nach Anspruch 13, mit einem Computer (100), der mit einem Bildschirm (401), einem Drucker (402) und einer Tastatur (403) verbunden ist.

20. Vorrichtung nach einem der vorhergehenden Ansprüche, mit Mitteln zum Aufzeichnen und Speichern aller Positionen der Kamera, des Periskops, des Trägerflugzeugs sowie der geographischen Koordinaten der Fortbewegung des Trägerflugzeugs und der Uhrzeit.

## Claims

1. Aerial cinematography device of the type comprising:
- a frame (6) that holds a first rotary assembly (4) and a second rotary assembly (5), the one (4) being mechanically independent of the other (5);
- The said first rotary assembly (4) having a vertical periscope tube (2) at one end (2) of which there is an optical device (1) that can carry out a vertical scan by pivoting around a horizontal axis so as to move the periscope tube (2) in rotation about its vertical axis;
- the said second rotary assembly (5) supporting a camera (3) in such manner that the camera (3) can be moved in coaxial rotation relative to the said periscope tube (2),
**characterised in** combination by the fact that each of the said rotary assemblies (4 or 5) comprises a turntable (41 or 51) mounted to rotate on a fixed plate (40 or 50) relative to the frame (6) and driven in rotation by respective drive means (43 or 53) without mechanical means for the transmission of movement, such that harmful vibration effects are eliminated,
and by the fact that the device comprises means for synchronising the rotation of the periscope tube (2) with the rotation of the camera (3), in particular when carrying out a panoramic scan.

2. Device according to Claim 1, in which the said motors (43, 53) are high-torque linear motors which enable a rotation speed of the order of 540° per minute and an angular precision of the order of 0.005°.

3. Device according to Claims 1 or 2, comprising a position sensor (44, 54) associated with each rotary assembly (4, 5).

4. Device according to and of Claims 1 to 3, in which the rotary assemblies (4, 5) comprise bearings (42, 52) having a large diameter, of the order of 400 millimetres, via which the turntables (41, 51) rest on the fixed plates (40, 50).

5. Device according to any of Claims 1 to 4, in which the fixed plates (40, 50), the turntables (41, 51) and the motors (43, 53) are identical and interchangeable between the first rotary assembly (4) and the second rotary assembly (5), so allowing standardisation of the components.

6. Device according to any of Claims 1 to 5, comprising means for controlling motors or drive means (43, 53) that can be pivoted by computer (100), so as to rotate the turntables (41, 51) under the control of a computer (100) to synchronise the rotations of the said turntables (41, 51) when the device is carrying out a panoramic scan.

7. Device according to Claim 1, in which the periscope tube (2) has at one end a prism (1) mounted to pivot around a horizontal axis (16) which passes through the centre of gravity of the prism.

8. Device according to Claim 7, in which the prism (1) is a viewfinder prism comprising a double mirror (13) with a prism (14, 15) on each side, mounted to rotate on a spindle (16) that passes through its axis of symmetry, such that it is perfectly balanced and therefore insensitive to gravity variations.

9. Device according to Claim 8, in which the rotation of the spindle (16) of the prism (1) is controlled by a linear motor (17) provided with a position sensor (18).

10. Device according to Claim 8 in which, between the viewfinder prism (1) and the camera (3), the periscope tube (2) comprises an optical image rectifier device (20).

11. Device according to Claim 10, in which the optical image rectifier device (20) is a PECHAN prism.

12. Device according to any of Claims 1 to 11, in which the motors of the prism (1) and the turntables (41, 51) are linear motors and are numerically controlled via a pilot (101, 102, 103).

13. Device according to Claim 12 comprising motor pilots (101, 102, 103), in which the motor pilots (101, 102, 103) arc connected to a computer (100).

14. Device according to Claim 13 comprising at least one pair of mini-levers (201, 202), in which the computer (100) is connected to at least one pair of mini-levers (201, 202), one of which (201) controls movements about the pitch and yaw axes and the other (202) controls movements about the roll axis and the zoom function.

15. Device according to Claim 14, also comprising at least one additional pair of mini-levers (201, 202) to enable dual control or training.

16. Device according to Claim 13, comprising a computer (100), in which the computer (100) is connected to gyroscopic stabilisers (301, 302, 303).

17. Device according to Claim 13, comprising a computer (100), in which the computer (100) is connected to a data recording device (500).

18. Device according to Claim 13, comprising a computer (100), in which the computer (100) is connected to an automatic camera aiming device (600).

19. Device according to Claim 13, in which the computer (100) is connected to a monitor screen (401), a printer (402) and a keyboard (403).

20. Device according to any of the preceding claims, comprising means for recording and memorising all the positions of the camera, the periscope, the aircraft carrying them and the geographical co-ordinates of the movement of the carrying aircraft, and the time.
